Europäisches Patentamt

European Patent Office

Office européen des brevets

(19)

(11) **EP 0 589 791 B1**

## (12) FASCICULE DE BREVET EUROPEEN

(45) Date de publication et mention
de la délivrance du brevet:
**29.07.1998 Bulletin 1998/31**

(51) Int Cl.$^6$: **G10L 5/06**

(21) Numéro de dépôt: **93402321.9**

(22) Date de dépôt: **22.09.1993**

(54) **Procédé et dispositif de mesure de ressemblance entre échantillons sonores**

Verfahren und Vorrichtung zur Messung der Ähnlichkeit von Sprachmusten

Method and apparatus for measuring the resemblance between speech samples

(84) Etats contractants désignés:
**DE GB**

(30) Priorité: **24.09.1992 FR 9211406**

(43) Date de publication de la demande:
**30.03.1994 Bulletin 1994/13**

(73) Titulaire: **FRANCE TELECOM**
**75015 Paris (FR)**

(72) Inventeurs:
- **Bimbot, Frédéric**
  **F-92260 Fontenay aux Roses (FR)**
- **Mathan, Luc**
  **F-22300 Lannion (FR)**

(74) Mandataire: **Dubois-Chabert, Guy et al**
**Société de Protection des Inventions**
**25, rue de Ponthieu**
**75008 Paris (FR)**

(56) Documents cités:
- **ICASSP 90 vol. 1 , 3 Avril 1990 , ALBUQUERQUE pages 289 - 292 H.GISH 'Robust discrimination in automatic speaker identification'**
- **SPEECH COMMUNICATION vol. 8, no. 1 , 1989 , AMSTERDAM pages 35 - 44 A.COHEN ET AL. 'On text independent speaker identification using a quadratic classifier with optimal features'**

**Description**

Domaine technique

La présente invention concerne un procédé de mesure de ressemblance entre échantillons sonores et un dispositif de mise en oeuvre de ce procédé.

Etat de la technique antérieure

Le domaine de l'invention est celui de la reconnaissance automatique d'une personne qui parle, ou locuteur. Ce domaine est un domaine de l'intelligence artificielle où les performances de la machine peuvent dépasser les performances humaines : dans le cas d'une courte émission et d'un grand nombre de locuteurs, le temps d'apprentissage pour reconnaître une nouvelle voix est très long pour un homme comparé à une machine.

La reconnaissance automatique de locuteurs consiste à mettre au point un système automatique capable de discriminer un locuteur parmi plusieurs en fonction de sa voix. On distingue deux types de tâches : l'identification du locuteur et la vérification du locuteur. Pour toutes les deux, on calcule la ressemblance entre deux échantillons sonores. L'un des deux est appelé échantillon de référence, et est le plus souvent disponible sous forme pré-traitée et pré-stockée dans un dictionnaire. L'autre, appelé échantillon de test, est destiné à être classifié.

L'identification du locuteur consiste à classer un échantillon sonore non identifié comme appartenant à un parmi N locuteurs de référence (N décisions possibles). La vérification du locuteur consiste, pour sa part, à décider si un échantillon sonore non identifié appartient à un locuteur de référence particulier : deux décisions sont possibles, oui ou non. L'identification du locuteur peut ne pas être restreinte aux N locuteurs de référence : on peut prévoir le cas où l'échantillon de test n'appartient à aucun des locuteurs de référence. Il y a alors N+1 décisions possibles : un parmi N locuteurs, ou rejet.

Il existe un grand nombre de documents de l'état de l'art relatifs à des procédés de reconnaissance de locuteurs. Le plus proche de l'invention est décrit dans un article de Herbert GISH intitulé "Robust Discrimination In Automatic Speaker Identification" (IEEE 1990, pages 289 à 292), dans lequel on trouve le principe d'utiliser les valeurs propres d'un produit de deux matrices de covariance. Mais les mesures proposées ne sont pas des mesures de sphéricité (voir notamment le paragraphe IV de cet article). L'inconvénient majeur de ce procédé est qu'il est très coûteux en temps de calcul.

Une thèse de Docteur Ingénieur de Yves GRENIER intitulée "Identification du locuteur et adaptation au locuteur d'un système de reconnaissance phonémique" (présentée à l'Ecole Nationale Supérieure des Télécommunications le 27 octobre 1977) décrit un procédé de reconnaissance de locuteur dans lequel on utilise un critère de maximum de vraisemblance reposant, comme le procédé de GISH, sur l'extraction de valeurs propres. Ce procédé donne de bons résultats mais l'auteur souligne la lenteur du traitement.

L'invention a pour objet un procédé de mesure de ressemblance entre plusieurs échantillons sonores, présentant, par rapport aux procédés de l'état de l'art, de meilleures performances pour un temps de traitement beaucoup plus court.

Exposé de l'invention

La présente invention propose un procédé de mesure de ressemblance entre plusieurs échantillons sonores comprenant une phase d'apprentissage à partir d'un ou de plusieurs échantillons sonores de référence, et une phase de test à partir d'un ou de plusieurs échantillons sonores de test, ces phases d'apprentissage et de test comportant chacune une étape d'acquisition numérique et de prétraitement de l'échantillon sonore considéré, une étape d'analyse acoustique d'ordre p, et une étape de calcul de la matrice de covariance de taille p x p du signal vectoriel résultant, la phase d'apprentissage comprenant en outre une étape d'inversion de la matrice de covariance de test $X$ et une étape de stockage de la matrice ainsi obtenue $X^{-1}$ dans un dictionnaire, la phase de test comprenant une étape de multiplication de la matrice de covariance du test $Y$ avec la matrice de référence inversée $X^{-1}$, une étape d'extraction de tout ou partie des p valeurs propres $\lambda k$ de ce produit de matrice $YX^{-1}$, caractérisé en ce que la phase de test comprend, de plus, une étape de calcul utilisant une famille de fonctions $f$, dénommées fonctions de sphéricité généralisées, appliquée à ces valeurs propres $\lambda k$, de manière à obtenir une valeur numérique mesurant la ressemblance entre l'échantillon de test considéré et le (ou les) échantillon(s) de référence du dictionnaire, cette valeur pouvant être utilisée pour prendre une décision sur la classification de cet échantillon de test, et en ce que ces fonctions $f$ sont des combinaisons d'au moins deux des termes suivants :

$$a\,(\lambda_1,\lambda_2,...,\lambda_p) \;=\; \frac{1}{p}\sum_{k=1}^{p}\lambda_k$$

$$g\,(\lambda_1,\lambda_2,...,\lambda_p) \;=\; \sqrt[p]{\prod_{k=1}^{p}\lambda_k}$$

$$h\,(\lambda_1,\lambda_2,...,\lambda_p) \;=\; \left(\frac{1}{p}\sum_{k=1}^{p}\frac{1}{\lambda_k}\right)^{-1}$$

a, g et h représentant respectivement les moyennes arithmétique, géométrique et harmonique des valeurs propres $\lambda$k.

Avantageusement dans une première variante de réalisation, on utilise la trace de la matrice $YX^{-1}$ :

$$\sum_{k=1}^{p}\lambda_k, \;=\; \text{trace}\,(YX^{-1})$$

le déterminant de cette matrice :

$$\prod_{k=1}^{p}\lambda_k, \;=\; \det\,(YX^{-1})$$

et la trace de la matrice inversée $XY^{-1}$ :

$$\sum_{k=1}^{p}\frac{1}{\lambda_k} \;=\; \text{trace}\,(XY^{-1})$$

sans avoir besoin de calculer explicitement les valeurs propres $\lambda$k.

Avantageusement dans une seconde variante de réalisation, on stocke dans le dictionnaire non seulement les matrices de covariance X mais aussi leur inverse $X^{-1}$. La matrice Y est inversée lors du test. On effectue le calcul direct de la trace du produit de deux matrices A et B symétriques

$$\text{traceprod}\,(A, B) = \text{trace}\,(AB) = \sum_{i=1}^{p}\sum_{j=1}^{p} a_{ij}\,b_{ji} \;=\; \sum_{i=1}^{p} a_{ii}\,b_{ii} \;+\; 2\,.\sum_{i=1}^{p-1}\sum_{j=i+1}^{p} a_{ij}\,b_{ij}$$

Ce calcul s'applique au produit de Y par $X^{-1}$ et au produit de X par $Y^{-1}$ d'autre part.

Une opération en fonction de ces deux nombres produit la mesure recherchée.

Ce calcul permet d'accélérer les temps de traitements lorsque seuls les termes a et h entrent en jeu.

Dans l'étape de calcul on peut utiliser avantageusement une fonction telle que :

$$\text{traceprod}(Y, X^{-1}).\text{traceprod}(X, Y^{-1}) = a/h$$

L'invention concerne également un dispositif mettant en oeuvre le procédé décrit ci-dessus, qui comprend :

- un module d'acquisition numérique et de prétraitement,
- un module d'analyse acoustique,
- un module de calcul de matrice de covariance,
- un module d'inversion matricielle,
- un module de stockage dans un dictionnaire,
- un module de multiplication matricielle,
- un module d'extraction des valeurs propres,
- un module de calcul d'un signal de ressemblance.

Avantageusement dans la première variante de réalisation, ce dispositif comporte un module de calcul de la trace d'une matrice $YX^{-1}$ en parallèle avec un module de calcul du déterminant de cette matrice, un module d'inversion de cette matrice suivi d'un module du calcul de la trace de la matrice ainsi obtenue.

Avantageusement dans la seconde variante de réalisation, il comprend deux modules de calcul de la trace d'un produit (traceprod) de deux matrices, suivis d'un module de calcul du produit.

Le procédé et le dispositif de l'invention possèdent de nombreux avantages, et notamment :

- une grande robustesse à l'indépendance au texte prononcé (le système n'a pas besoin de connaître le contenu linguistique de l'échantillon de test),
- une grande simplicité de mise en oeuvre du dispositif, aussi bien au niveau de la création ou de la mise à jour du dictionnaire d'échantillons sonores de référence qu'à celui de l'exécution d'un test.

Le procédé de l'invention, dans sa conception la plus générale, permet d'obtenir une très bonne efficacité du résultat. Dans les variantes de réalisation l'invention permet en outre d'obtenir une grande simplicité de mise en oeuvre, aussi bien au niveau de la création ou de la mise à jour du dictionnaire d'échantillons sonores de référence qu'à celui de l'exécution d'un test, et une grande rapidité des temps de calcul.

Brève description des dessins

- La figure 1 illustre le procédé de l'invention,
- la figure 2 illustre un dispositif mettant en oeuvre le procédé de l'invention,
- les figures 3 et 4 illustrent deux variantes du dispositif représenté à la figure 2.

Exposé détaillé de modes de réalisation

Le procédé de l'invention comprend une première phase d'apprentissage pendant laquelle le (ou les) échantillon(s) capté(s) sont un (ou des) échantillon(s) sonore(s) de référence, et une phase de test pendant laquelle le (ou les) échantillon(s) capté(s) sont un (ou des) échantillon(s) sonore(s) de test.

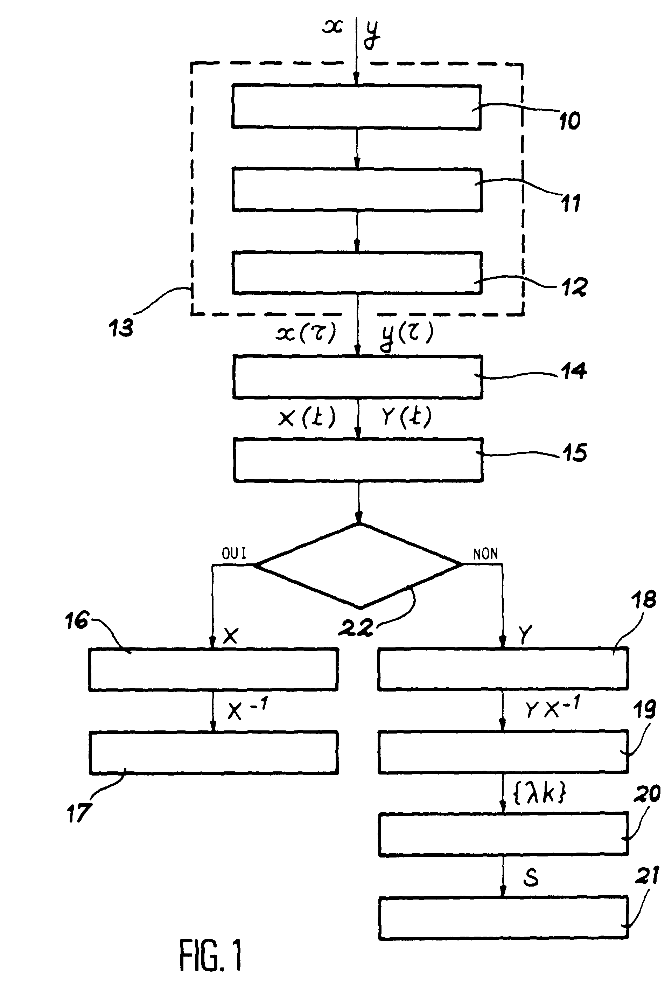

Comme représenté sur la figure 1, ces phases d'apprentissage et de test comportent chacune une étape d'acquisition numérique de prétraitement 13 comportant des étapes d'amplification 10, de filtrage 11 et de numérisation 12, à une fréquence quelconque, de l'échantillon sonore considéré, suivies d'une étape d'analyse acoustique 14 d'ordre p, et d'une étape de calcul de la matrice de covariance 15 de taille p x p du signal vectoriel résultant.

Les phases d'apprentissage et de test sont distinguées ensuite à l'aide du test 22 qui répond à la question : s'agit-il d'une phase d'apprentissage ?

La phase d'apprentissage comprend en outre, une étape d'inversion 16 de la matrice de covariance X et de stockage 17 de la matrice de référence $X^{-1}$ ainsi obtenue dans un dictionnaire.

La phase de test comprend une étape de multiplication 18 de la matrice de covariance du test Y avec la matrice de référence $X^{-1}$, une étape d'extraction 19 de tout ou partie des p valeurs propres $\lambda k$ de ce produit de matrice $YX^{-1}$.

Elle comprend, de plus, une étape de calcul 20 utilisant une famille de fonctions f dénommées "fonctions de sphéricité généralisées" appliquée à ces valeurs propres $\lambda k$, de manière à obtenir une valeur numérique S mesurant la ressemblance entre l'échantillon de test considéré et les échantillons de référence du dictionnaire, cette valeur S pouvant être utilisée dans le module 21 pour prendre une décision sur la classification de cet échantillon de test.

Le procédé de traitement du signal permet donc de comparer un échantillon test $y(\tau)$ à un échantillon référence $x(\tau)$, codé, comprimé et stocké et provenant d'un dictionnaire d'échantillons de référence.

On calcule ainsi une fonction des valeurs propres de la matrice $YX^{-1}$, où Y et X sont les matrices de covariance de tout ou partie du signal vectoriel résultant d'une analyse acoustique (au sens large du terme), cette analyse étant effectuée sur les signaux monodimensionnels $y(\tau)$ et $x(\tau)$. L'analyse acoustique est une extraction, à intervalles réguliers ou non, de caractéristiques à court terme des signaux $y(\tau)$ et $x(\tau)$. suivie éventuellement d'une normalisation par des caractéristiques à long terme de ces signaux ou par des facteurs indépendants de ces signaux. La variable t représente les instants de sélection des paramètres acoustiques.

Ainsi, on obtient à partir du signal monodimensionnel échantillonné $y(\tau)$, un signal multidimensionnel Y(t) de longueur T et à p composantes (p étant la dimension de l'analyse acoustique, par exemple, l'ordre d'un modèle LPC). On peut représenter ce signal comme une matrice [Y(t)] à p lignes et T colonnes, dont la ième composante à l'instant t sera notée Yi(t). La matrice de covariance Y s'obtient alors par le calcul suivant : $Y=[Y(t)][Y(t)]^T$, dont l'élément indicié ij se calcule par

$$Y_{ij} = \sum_{t=1}^{T} Y_i(t)Y_j(t).$$

La matrice Y ainsi calculée est symétrique (ainsi que définie positive). Elle peut subir ensuite, le cas échéant, toutes sortes de normalisations.

Ce calcul est naturellement identique pour $x(\tau)$.

On rappelle que les valeurs propres $\lambda$ (et les vecteurs propres associés b) d'une matrice M sont les solutions de l'équation : $Mb = \lambda b$ où les inconnues sont $\lambda$ et b.

On note $\lambda k$ les valeurs propres de la matrice $YX^{-1}$.

L'idée d'utiliser une fonction f des valeurs propres de $YX^{-1}$ comme mesure de ressemblance n'est pas nouvelle et apparaît notamment dans la publication de GISH citée plus haut, sous forme de calcul d'un rapport de vraisemblance. Une caractéristique essentielle de l'invention consiste à utiliser une certaine famille de fonctions f, dénommées fonctions de sphéricité généralisées, qui sont des combinaisons d'au moins deux des termes suivants :

$$a\,(\lambda_1,\lambda_2,...,\lambda_p) \;=\; \frac{1}{p}\sum_{k=1}^{p}\lambda_k$$

$$g\,(\lambda_1,\lambda_2,...,\lambda_p) \;=\; \sqrt[p]{\prod_{k=1}^{p}\lambda_k}$$

$$h\,(\lambda_1,\lambda_2,...,\lambda_p) \;=\; \left(\frac{1}{p}\sum_{k=1}^{p}\frac{1}{\lambda_k}\right)^{-1}$$

a, g et h présentent respectivement les moyennes arithmétique, géométrique et harmonique des valeurs propres $\lambda k$.

Or,

$$\lambda_1 = \lambda_2 = ... = \lambda p \Rightarrow a = g = h$$

On peut alors noter que, pour des $\lambda k$ toutes positives, on a toujours : $a > g > h$.

Si la matrice $YX^{-1}$ est égale à l'identité, à un coefficient multiplicatif près, on a donc : $a/h = a/g = g/h = 1$.

Ces mêmes rapports, dits de sphéricité, sont supérieurs à 1 dès qu'au moins une des valeurs propres $\lambda k$ diffère des autres.

Soit les fonctions f qui peuvent se mettre sous la forme :

$$f(\lambda_1, \lambda_2, ..., \lambda_p) = F(a(\lambda_1, \lambda_2, ..., \lambda_p), g(\lambda_1, \lambda_2, ..., \lambda_p), h(\lambda_1, \lambda_2, ..., \lambda_p)),$$

avec

$F(a,g,h)$ extremum pour $a=g=h$

Toute fonction de cette famille doit être vue comme une mesure de sphéricité généralisée, dont on peut déduire directement une mesure de ressemblance entre X et Y.

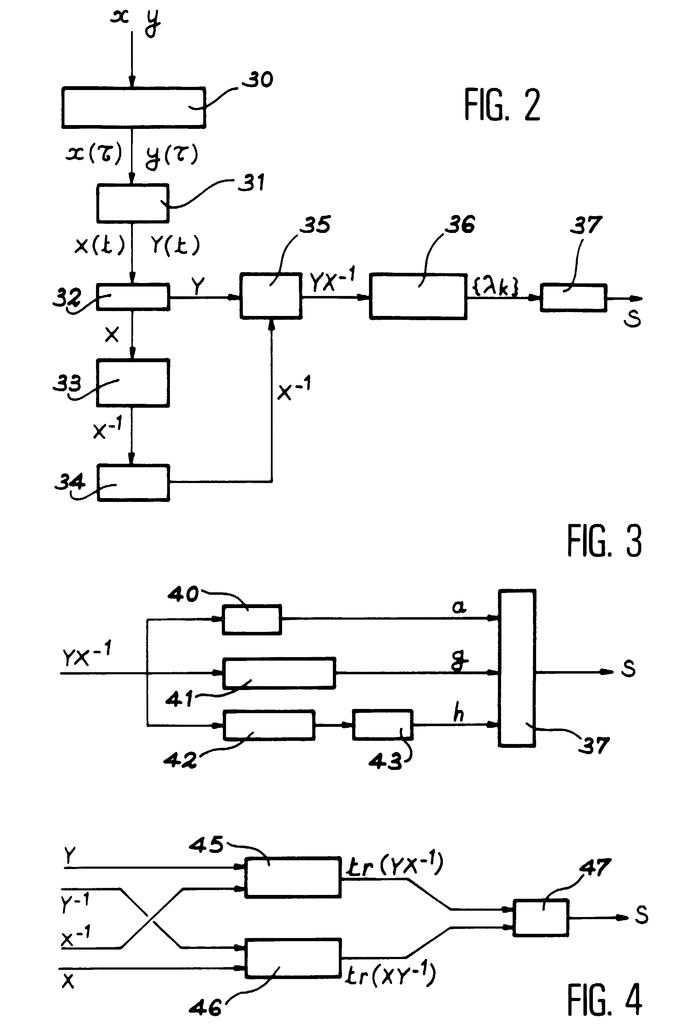

Un exemple de dispositif de mise en oeuvre de ce procédé de l'invention est représenté à la figure 2. Il comprend les modules suivants :

- un module 30 d'acquisition et de prétraitement des différents échantillons sonores x et y,
- un module 31 d'analyse acoustique d'ordre p de ces échantillons sonores,
- un module 32 de calcul d'une matrice de covariance (X et Y) de taille p x p du signal vectoriel résultant de l'analyse acoustique de différents signaux,
- un module 33 d'inversion matricielle de la matrice de covariance X,
- un module 34 de stockage de la matrice $X^{-1}$ dans un dictionnaire,
- un module 35 de multiplication des matrices Y et $X^{-1}$,
- un module 36 d'extraction des valeurs propres de ce produit de matrice,
- un module 37 de calcul d'un signal S de ressemblance.

Les fonctions a, g et h définies ci-dessus ne nécessitent pas l'extraction explicite des valeurs propres. Ceci tient au fait qu'il existe des invariants matriciels par changement de base. Par exemple, la somme des valeurs propres d'une matrice est égale à sa trace (c'est-à-dire la somme de ses éléments diagonaux) ; le produit des valeurs propres est égal à son déterminant. On a ainsi les relations suivantes :

$$\sum_{k=1}^{p} \lambda_k = \text{trace } (YX^{-1})$$

$$\prod_{k=1}^{p} \lambda_k = \det (YX^{-1})$$

$$\sum_{k=1}^{p} \frac{1}{\lambda_k} = \text{trace } (XY^{-1})$$

Il existe donc des variantes du dispositif de l'invention, qui aboutissent au même résultat, dont la configuration ne fait pas apparaître explicitement de module 36 d'extraction de valeurs propres. On peut ainsi remplacer ce module 36 de calcul des valeurs propres par tout ou partie des modules représentés sur la figure 3.

Dans une première variante, représentée sur cette figure 3, on remplace le module 36 de calcul des valeurs propres par un module 40 de calcul de la trace de la matrice $YX^{-1}$ en parallèle avec un module 41 de calcul du déterminant de cette matrice, et un module 42 d'inversion de cette matrice suivi d'un module 43 du calcul de la trace de la matrice ainsi obtenue. On obtient ainsi les trois termes a, g et h (à un facteur ou une puissance près), qui contribuent alors directement au calcul de la mesure de sphéricité.

Certaines fonctions de sphéricité peuvent être réalisées de façon encore plus simple. Par exemple, si la fonction des valeurs propres comporte uniquement les deux termes suivants :

$$\sum_{k=1}^{p} \lambda_k \quad \text{et} \quad \sum_{k=1}^{p} \frac{1}{\lambda_k},$$

il suffit en effet de calculer l'inverse $Y^{-1}$ de la matrice Y. Le module 36 de calcul de valeurs propres peut être remplacé par un module d'inversion de matrice (en l'occurence symétrique) et de calcul de trace (somme des éléments diagonaux). Dans ce cas, pour des raisons de rapidité, le dictionnaire stocke également les matrices X, en plus des matrices $X^{-1}$. Il est alors possible de simplifier le dispositif en profitant de la propriété suivante :

$$\text{traceprod}(A, B) = \text{trace}(AB) = \sum_{i=1}^{p} \sum_{j=1}^{p} a_{ij}\, b_{ji} = \sum_{i=1}^{p} a_{ii}\, b_{ii} + 2 . \sum_{i=1}^{p-1} \sum_{j=i+1}^{p} a_{ij}\, b_{ij}$$

pour A et B symétriques.

Ainsi dans une seconde variante du dispositif de l'invention les modules 35, 36 et 37 de la figure 2 sont remplacés par deux modules 45 et 46 de calcul de la trace du produit de deux matrices (symétriques), suivis d'un module 47 de calcul du produit.

On stocke dans le dictionnaire non seulement les matrices de covariance X, mais aussi leur inverse $X^{-1}$. La matrice Y est inversée lors du test (ceci n'est pas représenté sur la figure 4). On effectue le calcul direct de la trace du produit de deux matrices (symétriques), et une opération en fonction de deux nombres, produisant la mesure recherchée (par exemple une multiplication).

On a ainsi :

$$\text{traceprod}(Y, X^{-1}) \cdot \text{traceprod}(X, Y^{-1}) = \left(\sum_{k=1}^{p} \lambda_k\right) \cdot \left(\sum_{k=1}^{p} \frac{1}{\lambda_k}\right) = p^2 \frac{a}{h}$$

Cette seconde variante permet d'obtenir d'excellents résultats en identification.

Dans un exemple de réalisation le résultat obtenu est de 97,8 % sur 2100 tests indépendants en utilisant des échantillons de test de durée moyenne égale à environ 3 secondes et provenant de 420 locuteurs différents (5 tests par locuteur). Les références ont été calculées pour chaque locuteur sur un échantillon de durée moyenne égale à environ 15 secondes, et ne comportant aucun lien linguistique ni avec les échantillons de test, ni avec les autres échantillons de référence : aucune phrase de l'ensemble de test n'est présente dans l'ensemble de référence, et toutes les phrases de l'ensemble de référence sont différentes. Une totale indépendance au texte (au contenu linguistique) est donc obtenue.

Lorsque les tests ont une durée d'environ 15 secondes, le taux d'identification obtenu (toujours sur 420 locuteurs, mais un seul test par locuteur) atteint 99,5 %.

D'autres fonctions de sphéricité généralisées conduisent à des résultats à peine inférieurs, par exemple, les combinaisons linéaires des rapports de sphéricité ($ah^{-1}$, $ag^{-1}$, $gh^{-1}$) et de leurs puissances (quelconques). De même, les résultats sont quasiment équivalents si l'on remplace les $\lambda k$ par des fonctions monotones des $\lambda k$ (par exemple, si l'on remplace $\lambda k$ par sa racine carrée). Mais il faut bien préciser qu'il ne s'agit là que de variantes du procédé de l'invention.

Le procédé de l'invention peut être utilisé dans de très nombreuses applications nécessitant un accès sélectif, notamment pour des raisons de confidentialité. Le dispositif de l'invention permet alors la saisie des caractéristiques de la signature sonore correspondante, puis la vérification d'identité.

On peut distinguer notamment les applications suivantes :

- contrôle d'accès à des processus physiques :

- sécurité,
- protection industrielle ;

- accès privilégié à des informations :

  - centres de renseignements,
  - banques de données ;

- validation des transactions et opérations bancaires ;
- affectation de tâches nominatives et confidentielles :

  - utilisation d'appareils ne devant servir qu'à une seule personne ;

- applications domestiques :

  - protection par verrou électronique ;

- reconnaissance de la parole :

  - adaptation d'un système de reconnaissance de la parole à plusieurs locuteurs ;

- téléconférence :

  - accès réservé aux membres d'une réunion,
  - surveillance des canaux de communication.

Le domaine de l'invention peut être étendu à d'autres applications nécessitant la mesure de ressemblance entre échantillons sonores ; notamment l'analyse d'ambiance acoustique, la reconnaissance de morceaux de musique, etc...

## Revendications

1. Procédé de mesure de ressemblance entre échantillons sonores comprenant une phase d'apprentissage à partir d'un ou plusieurs échantillon(s) sonore(s) de référence, et une phase de test à partir d'un ou de plusieurs échantillon(s) sonore(s) de test, ces phases d'apprentissage et de test comportant chacune une étape (13) d'acquisition numérique et de prétraitement (13) de l'échantillon sonore considéré, une étape (14) d'analyse acoustique d'ordre p, et une étape (15) de calcul de la matrice de covariance de taille p x p du signal vectoriel résultant, la phase d'apprentissage comprenant en outre une étape (16) d'inversion de la matrice de covariance de référence X et une étape (17) de stockage de la matrice $X^{-1}$ ainsi obtenue dans un dictionnaire, la phase de test comprenant une étape (18) de multiplication de la matrice de covariance du test Y avec la matrice de référence $X^{-1}$, une étape (19) d'extraction de tout ou partie des p valeurs propres $\lambda k$ de ce produit de matrices, caractérisé en ce que la phase de test comprend, de plus, une étape (20) de calcul utilisant une famille de fonctions f, dénommées fonction de sphéricité généralisées, appliquée à ces valeurs propres $\lambda k$, de manière à obtenir une valeur numérique mesurant la ressemblance entre l'échantillon de test considéré et les échantillons de référence du dictionnaire, cette valeur pouvant être utilisée pour prendre une décision sur la classification de cet échantillon de test ; et en ce que ces fonctions f sont des combinaisons d'au moins deux des termes suivants :

$$a(\lambda_1, \lambda_2, ..., \lambda_p) = \frac{1}{p} \sum_{k=1}^{p} \lambda_k$$

$$g(\lambda_1, \lambda_2, ..., \lambda_p) = \sqrt[p]{\prod_{k=1}^{p} \lambda_k}$$

$$h\,(\lambda_1,\lambda_2,...,\lambda_p) = \left(\frac{1}{p} \sum_{k=1}^{p} \frac{1}{\lambda_k}\right)^{-1}$$

a, g et h représentant respectivement les moyennes arithmétique, géométrique et harmonique des valeurs propres $\lambda$k.

2. Procédé de mesure selon la revendication 1, caractérisé en ce que dans l'étape de calcul (20) on utilise la trace de la matrice $YX^{-1}$ :

$$\sum_{k=1}^{p} \lambda_k = \text{trace } (YX^{-1})$$

le déterminant de cette matrice :

$$\prod_{k=1}^{p} \lambda_k = \det (YX^{-1})$$

et la trace de la matrice inversée $XY^{-1}$:

$$\sum_{k=1}^{p} \frac{1}{\lambda_k} = \text{trace } (XY^{-1})$$

sans avoir besoin de calculer explicitement les valeurs propres $\lambda$k.

3. Procédé de mesure selon la revendication 2, caractérisé en ce que l'on stocke dans le dictionnaire non seulement les matrices de covariance X, mais aussi leur inverse $X^{-1}$, en ce que la matrice Y est inversée lors du test, et en ce que l'on effectue le calcul direct de la trace du produit de deux matrices A et B symétriques

$$\text{traceprod } (A, B) = \text{trace } (AB) = \sum_{i=1}^{p} \sum_{j=1}^{p} a_{ij}\, b_{ji} = \sum_{i=1}^{p} a_{ii}\, b_{ii} + 2 \cdot \sum_{i=1}^{p-1} \sum_{j=i+1}^{p} a_{ij}\, b_{ij}$$

ce calcul s'appliquant à $(X, Y^{-1})$ et à $(Y, X^{-1})$, et une opération en fonction de ces deux nombres, produisant la mesure recherchée.

4. Procédé de mesure selon la revendication 3, caractérisé en ce que dans l'étape de calcul on utilise une fonction telle que :

$$\text{traceprod } (Y,X^{-1}).\text{traceprod}(X,Y^{-1}) = p^2\, a/h$$

5. Dispositif de mise en oeuvre du procédé selon l'une quelconque des revendications précédentes, comprenant

-   un module (30) d'acquisition numérique et de prétraitement des échantillons sonores,
-   un module (31) d'analyse acoustique,
-   un module (32) de calcul de matrice de covariance,
-   un module (33) d'inversion matricielle,
-   un module (34) de stockage dans un dictionnaire,
-   un module (35) de multiplication matricielle,
-   un module (36) d'extraction des valeurs propres,
-   un module (37) de calcul d'un signal de ressemblance et caractérisé en ce qu'il comprend un module de calcul des fonctions de sphéricité généralisées nécessaires à la mise en oeuvre dudit procédé.

6. Dispositif selon la revendication 5, caractérisé en ce qu'il comporte un module (40) de calcul de la trace d'une matrice YX$^{-1}$ en parallèle avec un module (41) de calcul du déterminant de cette matrice, et un module (42) d'inversion de cette matrice suivi d'un module (43) du calcul de la trace de la matrice ainsi obtenue ou toute combinaison de deux de ces trois modules seulement.

7. Dispositif selon la revendication 5, caractérisé en ce qu'il comprend deux modules (45, 46) de calcul de la trace du produit de deux matrices, suivis d'un module (47) de calcul du produit.

**Patentansprüche**

1. Verfahren zur Messung der Ähnlichkeit von Sprachmustern mit einer auf einem oder mehreren Bezugssprachmustern beruhenden Lernphase und einer auf einem oder mehreren Testsprachmustern beruhenden Testphase, wobei diese Lern- und Testphasen jeweils einen Schritt zur digitalen Erfassung (13) und zur Vorverarbeitung (13) des betreffenden Sprachmusters, einen Schritt (14) zur akustischen Analyse der Ordnung p und einen Schritt (15) zur Berechnung der Kovarianz-Matrix der Größe p x p des resultierenden vektoriellen Signals umfassen, die Lernphase außerdem einen Schritt (16) zur Inversion bzw. Umkehrung der Kovarianz-Matrix X und einen Schritt (17) zur Abspeicherung der so erhaltenen Matrix X$^{-1}$ in einem Verzeichnis umfaßt, die Testphase einen Schritt (18) des Multiplizierens der Kovarinanzmatrix des Tests Y mit der Bezugsmatrix X$^{-1}$ und einen Schritt (19) der Abfragens bzw. Auslesens aller oder eines Teils der p Eigenwerte k dieses Matrizenprodukts umfaßt,
**dadurch gekennzeichnet,**
daß die Testphase außerdem einen Rechenschritt (20) mit einer Gruppe von Funktionen f umfaßt, generalisierte Sphärizitäts- bzw. Kugelfunktionen genannt, angewandt auf diese Eigenwerte k, um einen die Ähnlichkeit zwischen dem betreffenden Testmuster und den Bezugsmustern des Verzeichnisses messenden digitalen Wert zu erhalten, wobei dieser Wert benutzt werden kann, um eine Entscheidung über die Klassifizierung dieses Testmusters zu treffen; und dadurch, daß diese Funktionen f Kombinationen von wenigstens zwei der folgenden Ausdrücken sind:

$$a\,(\lambda_1, \lambda_2, ..., \lambda_p) \;=\; \frac{1}{p} \sum_{k=1}^{p} \lambda_k$$

$$g\,(\lambda_1, \lambda_2, ..., \lambda_p) \;=\; \sqrt[p]{\prod_{k=1}^{p} \lambda_k}$$

$$h\,(\lambda_1, \lambda_2, ..., \lambda_p) \;=\; \left( \frac{1}{p} \sum_{k=1}^{p} \frac{1}{\lambda_k} \right)^{-1}$$

wobei a, g und h jeweils arithmetische, geometrische und harmonische Mittel der Eigenwerte k darstellen.

2. Meßverfahren nach Anspruch 1, dadurch gekennzeichnet, daß man in dem Rechenschritt (20) die Spur einer Matrix YX$^{-1}$ benutzt:

$$\sum_{k=1}^{p} \lambda_k = trace\ (YX^{-1})$$

und die Determinante dieser Matrix:

$$\prod_{k=1}^{p} \lambda_k = det\ (YX^{-1})$$

und die Spur der invertierten Matrix $XY^{-1}$:

$$\sum_{k=1}^{p} \frac{1}{\lambda_k} = trace\ (XY^{-1})$$

ohne daß man explizit die Eigenwerte k berechnen muß.

3.  Meßverfahren nach Anspruch 2, dadurch gekennzeichnet,
    daß man in dem Verzeichnis nicht nur die Kovarianzmatrizen X speichert, sondern auch ihren Kehrwert bzw. ihre Inversion $X^{-1}$, dadurch, daß die Matrix Y beim Test invertiert ist bzw. wird, und dadurch, daß man die direkte Berechnung der Spur des Produkts der beiden symmetrischen Matrizen A und B

$$traceprod\ (A, B) = trace\ (AB) = \sum_{i=1}^{p} \sum_{j=1}^{p} a_{ij}\ b_{ji} = \sum_{i=1}^{p} a_{ii}\ b_{ii} + 2 \cdot \sum_{i=1}^{p-1} \sum_{j=i+1}^{p} a_{ij}\ b_{ij}$$

durchführt, wobei diese Berechnung auf $(X, Y^{-1})$ und auf $(Y, X^{-1})$ angewandt wird, und eine Operation in Abhängigkeit von diesen beiden Zahlen, die das gesuchte Maß liefert.

4.  Meßverfahren nach Anspruch 3, dadurch gekennzeichnet,
    daß man in den Rechenschritt ein Funktion wie folgende verwendet:

$$traceprod\ (Y,X^{-1}).traceprod(X,Y^{-1}) = p^2\ a/h$$

5.  Vorrichtung zur Anwendung des Verfahrens nach einem der vorangehenden Ansprüche, umfassend:

    -   einen Modul (30) zur digitalen Erfassung und Verarbeitung der Sprachmuster,
    -   einen Modul (31) zur akustischen Analyse,
    -   einen Modul (32) zur Berechnung einer Kovarianz-Matrix,
    -   einen Matrizeninversionsmodul (33),
    -   einen Speichermodul (34) in einem Verzeichnis,
    -   einen Matrizenmultiplikationsmodul (35),
    -   einen Abfrag- bzw. Auslesmodul (36) der Eigenwerte,
    -   einen Berechnungsmodul (37) eines Ähnlichkeitssignals,

    **dadurch gekennzeichnet,**
    daß sie einen Modul zur Berechnung der zur Durchführung des genannten Verfahrens notwendigen generalisierten Sphärizitäts-bzw. Kugelfunktionen umfassen.

**6.** Vorrichtung nach Anspruch 5, dadurch gekennzeichnet,
daß es einen Modul (40) zur Berechnung der Spur einer Matrix $YX^{-1}$ parallel zu einem Modul (41) zur Berechnung der Determinierenden dieser Matrix und einen Inversionsmodul (42) dieser Matrix umfaßt, gefolgt von einem Modul (43) zur Berechnung der Spur der so erhaltenen Matrix und jeder Kombination von nur zwei der drei Module.

**7.** Vorrichtung nach Anspruch 5, dadurch gekennzeichnet,
daß sie zwei Module (45, 46) zur Berechnung der Spur des Produkts der beiden Matrizen umfaßt, gefolgt von einem Modul 47 zur Berechnung des Produkts.

**Claims**

**1.** Process for measuring the resemblance between several sound samples comprising a learning phase from one or more reference sound samples, and a test phase from one or more test sound samples, said learning and test phases each incorporating a digital acquisition and preprocessing stage (13) for the considered sound sample, an order p acoustic analysis stage (14) and a stage (15) of calculating the covariant matrix of size p x p of the resulting vector signal, the learning phase also incorporating a stage (16) of inverting the test covariance matrix X and a storage stage (17) of the thus obtained matrix $X^{-1}$ in a dictionary, the test phase having a stage (18) of multiplying the covariance matrix of test Y with the inverted reference matrix $X^{-1}$, an extraction stage (19) with respect to all or part of the proper p values Xk of said matrix product $YX^{-1}$, characterized in that the test phase also comprises a calculating stage (20) using a family of functions f, called generalized sphericity functions, applied to said proper value $\lambda k$, so as to obtain a digital value measuring the resemblance between the considered test sample and the reference sample or samples of the dictionary, said value being usable for taking a decision on the classification of said test sample and in that said functions f are combinations of at least two of the following terms:

$$a\ (\lambda_1, \lambda_2, ..., \lambda_p)\ =\ \frac{1}{p} \sum_{k=1}^{p} \lambda_k$$

$$g\ (\lambda_1, \lambda_2, ..., \lambda_p)\ =\ \sqrt[p]{\prod_{k=1}^{p} \lambda_k}$$

$$h\ (\lambda_1, \lambda_2, ..., \lambda_p)\ =\ \left( \frac{1}{p} \sum_{k=1}^{p} \frac{1}{\lambda_k} \right)^{-1}$$

a, g and h representing respectively the arithmetic, geometrical and harmonic mean values of the proper values $\lambda k$.

**2.** Measurement process according to claim 1, characterized in that in the calculation stage (20) use is made of the trace of the matrix $YX^{-1}$ :

$$\sum_{k=1}^{p} \lambda_k = \text{trace} (YX^{-1})$$

the determinant of said matrix:

$$\prod_{k=1}^{p} \lambda_k = \det (YX^{-1})$$

and the trace of the inverted matrix $YX^{-1}$;

$$\sum_{k=1}^{p} \frac{1}{\lambda_k} = \text{trace} (XY^{-1})$$

without having to expressly calculate the proper value $\lambda k$.

3. Measurement process according to claim 2, characterized in that storage takes place in the dictionary not only of the covariance matrixes X, but also their inverse $X^{-1}$, the matrix Y being inverted during the test and direct calculation takes place of the trace of the product of two symmetrical matrixes A and B:

$$\text{traceprod} (A, B) = \text{trace} (AB) = \sum_{i=1}^{p} \sum_{j=1}^{p} a_{ij} \, b_{ji} = \sum_{i=1}^{p} a_{ii} \, b_{ii} + 2 \cdot \sum_{i=1}^{p-1} \sum_{j=i+1}^{p} a_{ij} \, b_{ij}$$

4. Measurement process according to claim 3, characterized in that in the calculation stage use is made of a function such that:

$$\text{traceprod}(Y, X^{-1}) \cdot \text{traceprod}(X, Y^{-1}) = p^2 \, a/h$$

5. Apparatus for performing the process according to any one of the preceding claims, comprising:

   - a digital acquisition and preprocessing module (30),
   - an acoustic analysis module (31),
   - a covariance matrix calculating module (32),
   - a matrix inversion module (33),
   - a module for storing in a dictionary (34),
   - a matrix multiplication module (35),
   - a module for extracting proper values (36),
   - a module for calculating a resemblance signal (37)

   and characterized in that it comprises a module for calculating the generalized sphericity functions necessary for implementing the process.

6. Apparatus according to claim 5, characterized in that it incorporates a module (40) for calculating the trace of a matrix $YX^{-1}$ in parallel with a module (41) for calculating the determinant of said matrix and a module (42) for inverting said matrix, followed by a module (43) for calculating the trace of the thus obtained matrix or any combination of two of these three modules only.

7. Apparatus according to claim 5, characterized in that it comprises two modules (45, 46) for calculating the trace of the product of the two matrixes, followed by a product calculation module (47).

FIG. 1

EP 0 589 791 B1

FIG. 2

FIG. 3

FIG. 4